# EUROPEAN PATENT APPLICATION

(11) **EP 2 001 254 A1**
(43) Date of publication of application: **10.12.2008**
(21) Application number: 07301090.2
(22) Date of filing: 07.06.2007
(51) Int. Cl.: H04Q 7/38

(54) **Method and apparatus for managing the transmission and receipt of a broadcast notification**

(71) Applicant: Motorola, Inc., Schaumburg, IL 60196 (US)
(72) Inventor: Putcha, Padmaja, Gurnee, IL 60031 (US); Perraud, Eric, 31170 Tournefeuille (FR)
(74) Representative: Delumeau, François Guy

(57) **Abstract**

The present invention provides a method and apparatus for managing the transmission and receipt of a broadcast notification in instances where a mobile wireless communication device (106) is operating in a dedicated communication mode, and is in the process of executing a soft handover, when a broadcast notification is received by the mobile wireless communication device (106) identifying the pending transmission of one or more broadcasts of interest. The present invention further provides for the broadcast notification, to include an active set of the cellular regions (102) currently communicating with the mobile wireless communication device (106) as part of the soft handover, that respectively support each of the broadcasts of interest.

## Description

### FIELD OF THE INVENTION

The present invention relates generally to the management of the transmission and receipt of a broadcast notification and, more particularly, to managing the transmission and receipt of a broadcast notification, when the mobile wireless communication device is communicating with the cellular network infrastructure via a dedicated channel, and the mobile wireless communication device is operating in soft handover mode.

### BACKGROUND OF THE INVENTION

Mobile subscribers use wireless communication devices to communicate over a cellular wireless communication network by transmitting and receiving wireless signals between the wireless communication devices and one or more base transceiver stations, located at varying distances proximate to the various mobile subscribers. Furthermore, a cellular network infrastructure can communicate with the various mobile subscribers using various point to point modes of communication and various point to multipoint modes of communication. Often, the wireless communication device will support simultaneously multiple concurrent communications involving the same and/or different modes.

Changing conditions, including movement of the mobile subscribers relative to the one or more base transceiver stations, will often necessitate that the wireless communication devices identify a different base station for facilitating ongoing communications and the establishment of any additional communications within the network. A decision to select a new serving base transceiver station, based upon the movement of the mobile subscriber relative to the one or more base transceiver stations, is often the result of a change in the received signal strength between the wireless communication devices and the previous serving base transceiver station. Either the received signal strength between the previous serving base transceiver station has degraded to an unacceptable level and/or a stronger signal is now available between the wireless communication device and a new alternative base transceiver station.

In at least some instances, the handover from one base transceiver station to another base transceiver station involves a make before break scenario, sometimes referred to as a soft handover. During this time, the wireless communication device can support concurrent communications with the cellular network infrastructure via multiple cellular regions and corresponding base transceiver stations. During a soft handover, concurrent communications with three or four base transceiver stations are not uncommon. In some instances, concurrent communications with up to six base transceiver stations are possible. During the time when a wireless communication device is engaged in a soft handover mode, it is possible that the network infrastructure will inform the wireless communication device of an upcoming broadcast of interest. However, in at least some current systems, it is not always clear which ones of the cellular regions, that the wireless communication device is currently communicating with in support of the soft handover and the corresponding communication via the dedicated channel, that provide support for the upcoming broadcast of interest. This often necessitates an attempted acquisition to be performed relative to a plurality of cellular regions, which are currently participating in the soft handover, some of which may and some of which may not separately support the broadcast of interest.

Any attempts for acquiring channel configuration for a broadcast of interest in a cellular region that does not support the broadcast of interest, represents an expenditure of system resources, that does not further make possible the receipt of the broadcast of interest, and in fact can result in a delay in the acquisition of a valid broadcast signal from a cellular region, which does support the corresponding broadcast of interest. Such is particularly the case, where a mobile subscriber is in the middle of a transition between multiple cellular regions, and the broadcast of interest may not be supported by each of the cellular regions with which the mobile station is currently communicating.

Consequently, the present inventors have recognized, that the management of the transmission and receipt of a broadcast notification, and correspondingly the broadcast itself can be improved through the provision of supplying a list (i.e. an active set), which identifies the cellular regions, which support a particular broadcast of interest for a particular mobile subscriber, while minimizing the attempts to acquire and synchronize to a non-existent broadcast communication in the cellular regions, which do not support the broadcast of interest.

### SUMMARY OF THE INVENTION

The present invention provides a method for notifying a mobile wireless communication device of a broadcast of interest to the mobile wireless communication device operating in a cellular communication network, where the cellular communication network comprises a plurality of cellular regions, each cellular region having at least one base transceiver station. The method includes determining if the mobile wireless communication device, that is an intended recipient of a broadcast notification is currently communicating with the at least one base transceiver station associated with at least one of the plurality of cellular regions via a dedicated channel. If the mobile wireless communication device is communicating with the at least one base transceiver station associated with at least one of the plurality of cellular regions via a dedicated channel, then a determination is made whether the mobile wireless communication device is operating in soft handover mode, where the mobile wireless communication device is concurrently communicating with multiple base transceiver stations, each associated with a different cellular region, via multiple respective dedicated channels. If the mobile wireless communication device is communicating with the at least one base transceiver station associated with at least one of the plurality of cellular regions via a dedicated channel, and if the mobile wireless communication device is operating in a soft handover mode, then transmitting to the mobile wireless communication device a broadcast notification, which includes a set of cellular regions, that identifies the cellular regions that are communicating the broadcast of interest.

In at least one embodiment, the set of cellular regions, that identifies the cellular regions that are communicating the broadcast of interest included in the broadcast notification consists of the cellular regions that are communicating the broadcast of interest with which the mobile wireless communication device is also communicating via a dedicated channel.

The present invention further provides a method of receiving a broadcast notification in a mobile wireless communication device for a broadcast of interest in a cellular communication network where the cellular communication network comprises a plurality of cellular regions, each cellular region having at least one base transceiver station. The method includes initiating a communication connection with the at least one base transceiver station associated with at least one of the plurality of cellular regions via a dedicated channel. The method further includes entering a soft handover mode of operation, while continuing to maintain the communication connection with the at least one base transceiver station associated with at least one of the plurality of cellular regions via a dedicated channel, including establishing and maintaining a communication connection via a dedicated channel with one or more additional base transceiver stations respectively associated with one or more additional different cellular regions. A broadcast notification including an identification of a set of cellular regions communicating the broadcast of interest is then received, and scheduling information for one or more of the cellular regions identified in the set of cellular regions communicating the broadcast of interest included in the received broadcast notification is acquired, while scheduling information in connection with receiving the broadcast for any cellular region not identified in the set of cellular regions communicating the broadcast of interest included in the received broadcast of interest is not attempted to be acquired.

The present invention still further provides a mobile wireless communication device. The mobile wireless communication device includes a transceiver, and a controller, which is coupled to the transceiver. The controller includes a handover module for managing the handover of the mobile wireless communication device between a plurality of cellular regions, including detecting communication conditions in which the mobile wireless communication device should enter a handover mode including a soft handover mode. The controller further includes a dedicated communication channel module for initiating a communication connection with the at least one base transceiver station associated with at least one of the plurality of cellular regions, and for establishing and maintaining a communication connection via a dedicated channel with one or more additional base transceiver stations respectively associated with one or more additional different cellular regions, while continuing to maintain the communication connection with the at least one base transceiver station associated with at least one of the plurality of cellular regions via a dedicated channel, upon entering the soft handover mode of operation. The controller still further includes a broadcast communication module for establishing and maintaining a broadcast communication including receiving a broadcast notification including an identification of a set of cellular regions communicating the broadcast of interest, and acquiring scheduling information for one or more of the cellular regions identified in the set of cellular regions communicating the broadcast of interest included in the received broadcast notification, while not attempting to acquire scheduling information in connection with receiving the broadcast for any cellular region not identified in the set of cellular regions communicating the broadcast of interest included in the received broadcast of interest.

These and other objects, features, and advantages of this invention are evident from the following description of one or more preferred embodiments of this invention, with reference to the accompanying drawings.

### BRIEF DESCRIPTION OF THE DRAWINGS

FIG. 1 is an exemplary topographical view of a geographical region representing at least a portion of the coverage area for a wireless communication system;
FIG. 2 is a block diagram of a mobile wireless communication device, such as a mobile subscriber, and the portion of the cellular network infrastructure with which the mobile wireless communication device more directly communicates in connection with the receipt of a broadcast notification;
FIG. 3 is a timing diagram associated with receiving a broadcast notification and a corresponding receipt of the broadcast, in accordance with at least one embodiment of the present invention;
FIG. 4 is a flow diagram of a method for notifying a mobile wireless communication device of a broadcast of interest to the mobile wireless communication device operating in a cellular communication network; and
FIG. 5 is a flow diagram of a method of receiving a broadcast notification in a mobile wireless communication device for a broadcast of interest in a cellular communication network.

### DETAILED DESCRIPTION OF THE PREFERRED EMBODIMENT(S)

While the present invention is susceptible of embodiment in various forms, there is shown in the drawings and will hereinafter be described presently preferred embodiments with the understanding that the present disclosure is to be considered an exemplification of the invention and is not intended to limit the invention to the specific embodiments illustrated.

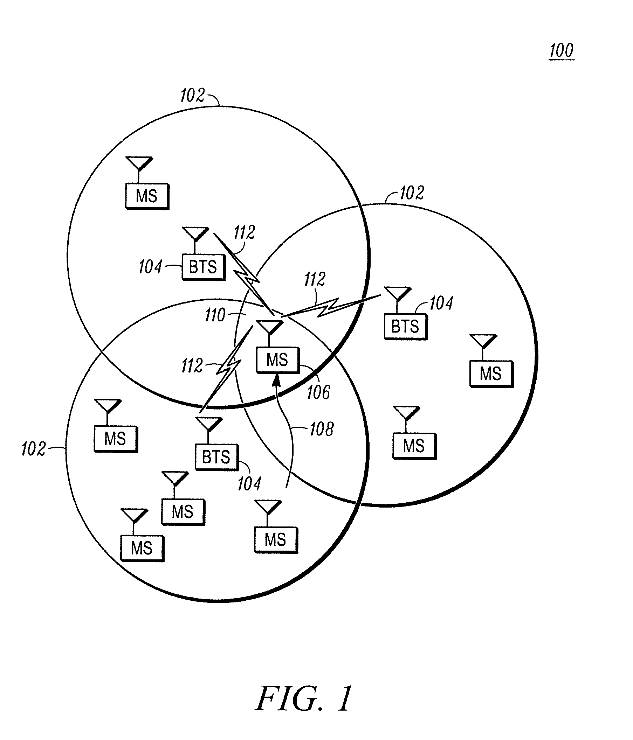

FIG. 1 illustrates an exemplary topographical view of at least a portion of a wireless communication system. The topographical view 100 includes a plurality of cells 102 pictorially represented as overlapping circles. The circles are only rough approximations of the footprint or area of coverage associated with each of a plurality of cellular regions, where in reality the area of transmission is not so uniformly defined. Each cell is typically served by one or more base transceiver stations (BTS) 104, referred to as a serving station, which communicates with mobile subscriber (MS) 106, such as a mobile wireless communication device, located and/or traveling 108 within the corresponding cell 102.

Generally, the further a mobile subscriber 106 moves away from the serving base station 104 the weaker the signal gets. Conversely, as a mobile station 106 moves toward another base station 104 the signal typically becomes stronger. As a mobile subscriber 106 continues to move away from a serving base station 104 and towards the base station 104 of a neighboring cell 102, at some point it will become desirable to transfer control of the continued communication to the base station 104 of the neighboring cell 102. The decision to transfer control is typically determined based upon the relative strength of the signal received from the serving base station and the base stations of each of the nearby cells 102. Consequently, wireless communication devices operating in association with several over the air operating standards monitor the relative strength of signals from both the serving cell and the one or more nearby neighboring cells.

As a mobile station approaches a boundary region between two cells, some over the air operating standards, which employ a soft handover, will begin to concurrently monitor the signals from multiple cellular regions, and may route a particular communication between each of the multiple cellular regions, until the mobile station firmly establishes its presence in one of the cellular regions. A soft handover is commonly referred to as a make before break, where the communication channel is typically established with the new target cell prior to releasing the prior serving cell and any of the other communication connections with any of the other cellular regions during the soft handover. During this transition period, a mobile station 106 may monitor signals or establish a concurrent communication channel with up to six different cellular regions. In some instances, the signal being communicated from multiple cellular regions can be combined to enhance signal reception. Arrow 108 is intended to represent a possible exemplary movement of mobile station 106 from an area within the lower left hand cellular region into an area corresponding to a region of overlap 110 for three different adjacent cellular regions.

While the mobile station is within this area, it is possible that the mobile station could be receiving112 the same communication from each of the three overlapping cells. This is generally the case when the mobile station 106 is engaged in a communication connection with the cellular network infrastructure, via a dedicated channel. In such an instance, the three overlapping cells may be identified as the active set of the particular mobile station for the particular communication via the dedicated channel. During this time, the mobile station 106 may receive a notification of broadcast, which is of interest to the mobile subscriber. However, in some instances the broadcast may not be being broadcast from each of the cellular regions 102, which are part of the current active set of the mobile station.

In at least some instances, the cellular network infrastructure will determine which of the cellular regions 102 will transmit a particular broadcast and/or the manner in which the broadcast is transmitted based upon the number and the location of the mobile stations that are interested in a particular broadcast. Where a cellular region includes a larger number of mobile stations that are interested in a particular broadcast, the broadcast may be established as a point to multipoint communication in the form of a broadcast that can be commonly received by the multiple mobile stations. Where a cellular region includes a fewer number of mobile stations, the cellular network infrastructure might elect to communicate the broadcast information via one or more point to point communications, such as via a dedicated channel, within that particular cellular region. Furthermore in a cellular region where the cellular network infrastructure is unaware of any mobile stations that are interested in a particular broadcast, the cellular network infrastructure may elect not to transmit the broadcast information in that particular cellular region. Consequently, a particular broadcast may not be transmitted in all cellular regions.

In the case of a mobile station communicating via a dedicated channel in a soft handover mode, it is possible that some of the cellular regions that the mobile station is currently communicating with in connection with the communication associated with the dedicated channel, may not transmit a broadcast that is of interest to the mobile station, or may only be transmitting it directly with other mobile stations via a dedicated channel. In such an instance, when the mobile station receives a broadcast notification message, it may not be immediately clear which of the cellular regions are supporting the broadcast. Consequently, the mobile station may attempt to acquire the broadcast signal from each of the cellular regions, even though in some instances there will be no broadcast signal to be acquired.

While prior systems alerted a mobile station as to the occurrence of a broadcast of interest, the broadcast notification message generally did not identify the particular cellular regions in which the broadcast would be transmitted, nor did the broadcast notification message identify the cellular regions corresponding to the active set of the particular mobile station in which the broadcast would be transmitted.

The present invention incorporates an identity of the cellular regions in which the service (i.e. the broadcast) is to be transmitted by including this information in the broadcast notification. In at least some instances the identity of the cellular regions that are included in the broadcast notification are limited to the cellular regions with which the mobile subscriber is currently communicating, and hence is part of its active set. In this way, the mobile subscriber can more effectively target the cellular regions within which an attempt is made to acquire the particulars of the communication of a broadcast of interest. Conversely, the mobile subscriber can avoid any attempts to acquire the particulars of a communication of a broadcast of interest in cellular regions, where there is no such communication. In some instances, there is a periodic predetermined time, when scheduling information associated with a particular broadcast is expected, so in cases where there is no broadcast for which scheduling information can be received, one must wait for the periodic predetermined time to pass, before one can presume that the particular cellular region will not be supporting, via a broadcast transmission, the particular broadcast of interest.

When the mobile subscriber does attempt to acquire the various broadcasts of interest in the various cellular regions of the active set, the mobile subscriber can use any one of various approaches in acquiring the various signals, including starting with the cellular regions known to be transmitting the broadcast of interest, and having the highest signal strength. Alternatively, the mobile subscriber could initially attempt to acquire the broadcast of interest from the cellular region with which the mobile station was most recently associated, and then proceed with the other cellular regions, that support the broadcast based upon signal strength. However, one skilled in the art will appreciate that other techniques for determining the acquisition sequence are possible without departing from the teachings of the present application.

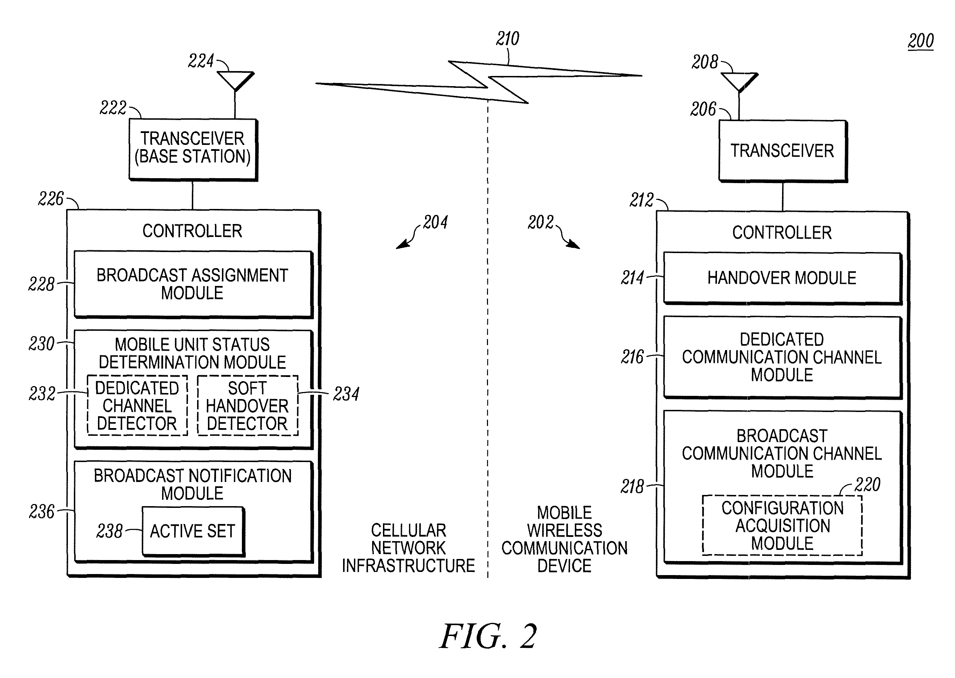

FIG. 2 illustrates a block diagram 200 of a mobile wireless communication device 202, such as a mobile subscriber, and the portion of the cellular network infrastructure 204 with which the mobile wireless communication device 202 more directly communicates in connection with the receipt of a broadcast notification. The mobile wireless communication device 202 includes a transceiver 206, which generates a signal that facilitates the transmission and reception of a wireless signal 210 via an associated antenna 208 coupled to the transceiver 206. The mobile wireless communication device 202 further includes a controller 212, which manages the reception of a broadcast notification.

The controller 212 of the mobile wireless communication device 202 includes a handover module 214, which manages the handover of the mobile wireless communication device 202 between a plurality of cellular regions 102, including detecting communication conditions in which the mobile wireless communication device 202 should enter a handover mode including a soft handover mode. The controller 212 additionally includes a dedicated communication channel module 216, which initiates a communication connection with the at least one base transceiver station 104 associated with at least one of the plurality of cellular regions 102, and establishes and maintains a communication connection via a dedicated channel with one or more additional base transceiver stations respectively associated with one or more additional different cellular regions, while continuing to maintain the communication connection with the at least one base transceiver station associated with at least one of the plurality of cellular regions via a dedicated channel, upon entering the soft handover mode of operation. The controller 212 still further includes a broadcast communication channel module 218, which establishes and maintains a broadcast communication including receiving a broadcast notification including an identification of a set of cellular regions communicating the broadcast of interest, and acquires scheduling information for one or more of the cellular regions identified in the set of cellular regions communicating the broadcast of interest included in the received broadcast notification, while not attempting to acquire scheduling information in connection with receiving the broadcast for any cellular region not identified in the set of cellular regions communicating the broadcast of interest included in the received broadcast of interest. In at least some instances the broadcast communication channel module 218 includes a configuration acquisition module 220 for purposes of managing the acquisition of scheduling information.

The cellular network infrastructure 204 similar to the mobile wireless communication device 202 includes a transceiver 222, which generates a signal that facilitates the transmission and reception of a wireless signal 210 via an associated antenna 224 coupled to the transceiver 222. In at least some instances, the transceiver 222 and antenna 224 are formed as part of a base transceiver station 104. The transceiver 222 is coupled to a controller 226 which manages the notification of a mobile wireless communication device 202 of a broadcast of interest.

The controller 226 of the cellular network infrastructure 204 includes a broadcast assignment module 228, which determines which one of the cellular regions will transmit a particular broadcast, and if so how the broadcast is transmitted (i.e. point to point, point to multi-point). The controller 226 further includes a mobile unit status determination module 230, which in turn has a dedicated channel detector 232 to determine if a particular mobile wireless communication device is currently communicating with at least one of the plurality of cellular regions via a dedicated channel, and further has a soft handover detector 234 to determine if the mobile wireless communication device is operating in a soft handover mode.

The controller 226 still further includes a broadcast notification module 236, which based upon the detected status of the particular mobile wireless communication device for which a broadcast notification is being formulated, produces a broadcast notification which includes an identification of the cellular regions that support the transmission of a broadcast of interest. In at least some instances, the identification of the cellular regions for a particular mobile wireless communication device 202 is limited to the particular cellular regions in the active set 238 of the mobile wireless communication device 202, which support the transmission of the broadcast of interest.

While the transceiver 222 of the cellular network infrastructure 204 is generally associated with a base transceiver station, the controller 226 of the cellular network infrastructure 204 can be formed as part of a base transceiver station or other network element.

In at least some instances the various modules of the controllers of both the mobile wireless communication device 202 and the cellular network infrastructure 204 include one or more sets of instructions stored in a computer readable format for execution by a microprocessor incorporated as part of the controller. In other instances, the various modules can additionally or alternatively include various logic circuitry, state machines as well as other control, logic and/or computational constructs, which could be implemented in hardware, software or both without departing from the teachings of the present invention.

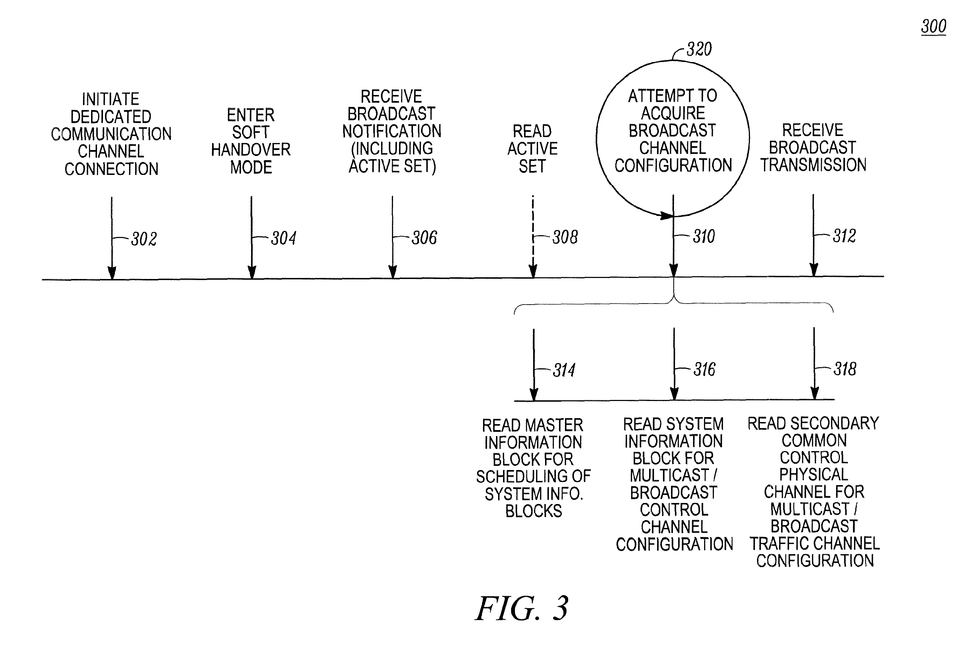

FIG. 3 illustrates a timing diagram 300 associated with receiving a broadcast notification and a corresponding receipt of the broadcast communication, in accordance with at least one embodiment of the present invention. Initially, a dedicated communication channel connection is initiated 302 by the mobile wireless communication device. The mobile wireless communication device then enters 304 a soft handover mode. A broadcast notification is then received 306, which when the mobile wireless communication device is in soft handover mode while engaged in a dedicated communication connection, such as a circuit switched voice connection or a dedicated packet switched data connection, includes an indication of cellular region supporting the broadcast of interest, which is sometimes limited to those cellular regions in the mobile wireless communication devices active set as defined by the cellular regions supporting the soft handover mode and the broadcast of interest. Where an identification of cellular regions supporting a broadcast of interest is based upon a defined active set, the active set is read 308. Otherwise an active set can be formulated by filtering the list of cellular regions supporting the broadcast of interest, with the cellular regions participating in a corresponding soft handover.

The mobile wireless communication device then attempts to acquire 310 broadcast channel configurations for the various broadcasts of interest associated with the cellular regions participating as part of the broadcast and the soft handover. The broadcast transmission is then received 312.

In connection with at least one exemplary cellular communication standard, namely wideband CDMA, as part of attempting to acquire 310 the broadcast channel configuration, the master information block is read 314 for receiving the scheduling of the system information blocks. The system information blocks are then read 316 for obtaining the multicast/broadcast control channel configuration. A secondary common control physical channel is then read 318 for obtaining the configuration for the multicast/broadcast traffic channel. Generally, this process can be repeated 320 in attempting to acquire broadcast channel configuration information for each cellular region included in the active set, which supports the broadcast of interest.

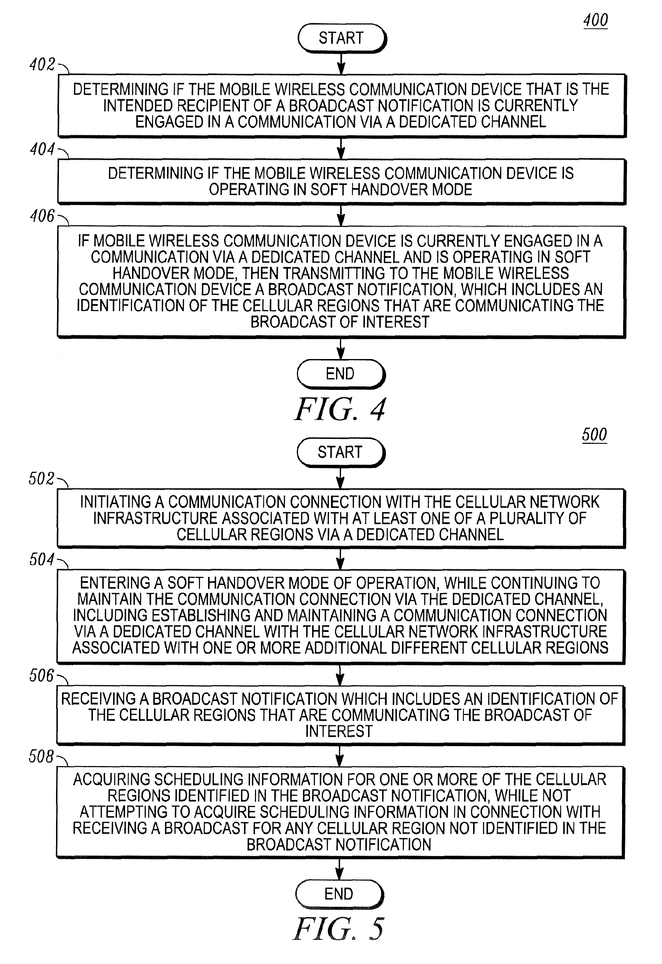

FIG. 4 illustrates a flow diagram 400 of a method for notifying a mobile wireless communication device of a broadcast of interest to the mobile wireless communication device operating in a cellular communication network. The method includes determining 402 if the mobile wireless communication device that is an intended recipient of a broadcast notification is currently engaged in a communication via a dedicated channel. If so, a determination 404 is made as to if the mobile wireless communication device is operating in a soft handover mode. If so, then a broadcast notification, which includes an identification of the cellular regions that are communicating the broadcast of interest, is transmitted 406 to the mobile wireless communication device.

FIG. 5 illustrates a flow diagram 500 of a method of receiving a broadcast notification in a mobile wireless communication device for a broadcast of interest in a cellular communication network. The method includes initiating 502 a communication connection with the cellular network infrastructure associated with at least one of a plurality of cellular regions via a dedicated channel. A soft handover mode is then entered 504, whereby a concurrent communication is established and/or maintained between multiple cellular regions via a dedicated channel. A broadcast notification is then received 506, which includes an identification of the cellular regions that are communicating the broadcast of interest. Scheduling information is then acquired 508 for one or more of the cellular regions identified in the broadcast notification, that coincides with cellular regions participating in the soft handover, while not attempting to acquire scheduling information in connection with receiving a broadcast for any cellular region not identified in the broadcast notification.

While the disclosed embodiments, generally refer to broadcast notifications which identify cellular regions that support the communication of the broadcast of interest, it is equally possible that the broadcast notification could alternatively identify the cellular regions that do not support the communication of the broadcast of interest, and still achieve the beneficial results. One skilled in the art will recognize these two alternatives as being effectively equivalent, where one set of cellular regions is identified through their express inclusion in a communicated list, and where another set of cellular regions is identified through their absence from the communicated list.

Furthermore while the present application generally refers to a mobile station, or a mobile wireless communication device, one skilled in the art will recognize the many different forms that are encompassed by such a generalized description including but not limited to cellular radio telephone, pagers, personal digital assistants, as well as other devices which support the wireless communication through their interaction with a cellular network infrastructure.

While the preferred embodiments of the invention have been illustrated and described, it is to be understood that the invention is not so limited. Numerous modifications, changes, variations, substitutions and equivalents will occur to those skilled in the art without departing from the spirit and scope of the present invention as defined by the appended claims.

## Claims

1. A method for notifying a mobile wireless communication device (106) of a broadcast of interest to the mobile wireless communication device operating in a cellular communication network comprising a plurality of cellular regions (102), each cellular region having at least one base transceiver station (104), the method comprising:
determining if the mobile wireless communication device (106), that is an intended recipient of a broadcast notification is currently communicating with the at least one base transceiver station (104) associated with at least one of the plurality of cellular regions (102) via a dedicated channel;
if the mobile wireless communication device (106) is communicating with the at least one base transceiver station (104) associated with at least one of the plurality of cellular regions (102) via a dedicated channel, then determining if the mobile wireless communication device (106) is operating in soft handover mode, where the mobile wireless communication device (106) is concurrently communicating with multiple base transceiver stations (104), each associated with a different cellular region (102), via multiple respective dedicated channels; and
if the mobile wireless communication device (106) is communicating with the at least one base transceiver station (104) associated with at least one of the plurality of cellular regions (102) via a dedicated channel, and if the mobile wireless communication device (106) is operating in a soft handover mode, then transmitting to the mobile wireless communication device (106) a broadcast notification, which includes a set of cellular regions (102), that identifies the cellular regions that are communicating the broadcast of interest.

2. A method in accordance with claim 1, wherein the set of cellular regions (102), that identifies the cellular regions that are communicating the broadcast of interest included in the broadcast notification consists of the cellular regions that are communicating the broadcast of interest with which the mobile wireless communication device (106) is also communicating via a dedicated channel.

3. A method in accordance with claim 1, wherein the broadcast notification includes a separate notification for each of a plurality of broadcasts of interest, where each notification includes a corresponding set of cellular regions (102), that identifies the cellular regions that are communicating the respective broadcast of interest.

4. A method in accordance with claim 1, wherein the broadcast of interest includes multimedia content.

5. A method in accordance with claim 1, wherein the mobile wireless communication device (106) is communicating voice data via the dedicated channel in support of a voice call.

6. A method in accordance with claim 1, wherein the mobile wireless communication device (106) is communicating packet data via the dedicated channel in support of a packet switched connection.

7. A method in accordance with claim 1, wherein the cellular communication network supports spread spectrum communication.

8. A method in accordance with claim 1 wherein the mobile wireless communication device (106) communicates with the at least one or more base transceiver station (104) associated with each of the plurality of cellular regions (102) in accordance with a cellular standard, which supports code division multiple access.

9. A method of receiving a broadcast notification in a mobile wireless communication device for a broadcast of interest in a cellular communication network comprising a plurality of cellular regions (102), each cellular region having at least one base transceiver station (104), the method comprising:
initiating (502) a communication connection with the at least one base transceiver station (104) associated with at least one of the plurality of cellular regions (102) via a dedicated channel;
entering (504) a soft handover mode of operation, while continuing to maintain the communication connection with the at least one base transceiver station (104) associated with at least one of the plurality of cellular regions (102) via a dedicated channel, including establishing and maintaining a communication connection via a dedicated channel with one or more additional base transceiver stations (104) respectively associated with one or more additional different cellular regions (102);
receiving (506) a broadcast notification including an identification of a set of cellular regions communicating the broadcast of interest; and
acquiring (508) scheduling information for one or more of the cellular regions (102) identified in the set of cellular regions communicating the broadcast of interest included in the received broadcast notification, while not attempting to acquire scheduling information in connection with receiving the broadcast for any cellular region not identified in the set of cellular regions communicating the broadcast of interest included in the received broadcast of interest.

10. A method in accordance with claim 9, further comprising receiving the broadcast of interest using the scheduling information acquired for one or more of the cellular regions (102) included in the list of cellular regions identified as communicating the broadcast of interest.

11. A method in accordance with claim 10, where a signal associated with the broadcast of interest is received from multiple cellular regions (102) and is combined to produce the received broadcast of interest.

12. A method in accordance with claim 9, wherein the set of cellular regions, that identifies the cellular regions that are communicating the broadcast of interest included in the broadcast notification consists of the cellular regions that are communicating the broadcast of interest with which the mobile wireless communication device currently maintains a communication connection via a dedicated channel.

13. A method in accordance with claim 9, wherein the order in which the scheduling information is acquired (508), is based upon a relative signal strength of the signal received from each of the cellular regions (102) included in the set of cellular regions communicating the broadcast of interest.

14. A method in accordance with claim 13, wherein the scheduling information for the broadcast of interest in the cellular regions (102) having a higher relative signal strength are acquired before the scheduling information for the broadcast of interest in the cellular regions having a lower relative signal strength are acquired.

15. A method in accordance with claim 9, wherein the order in which the scheduling information (508) is acquired is based upon whether the communication connection via the corresponding dedicated channel was initiated as a result of an initiation of the communication or whether the communication connection via the corresponding dedicated channel was initiated as a result of entering a soft handover mode of operation.

16. A method in accordance with claim 15, wherein the scheduling information for the broadcast of interest in the cellular region where the dedicated channel was initiated as a result of an initiation of the communication is acquired before the scheduling information for the broadcast of interest in the cellular regions where the dedicated channel was initiated as a result of entering a soft handover mode of operation.

17. A method in accordance with claim 16, wherein the scheduling information for the broadcast of interest in the cellular regions where the dedicated channel was initiated as a result of entering a soft handover mode of operation are acquired in an order where the scheduling information for the broadcast of interest in the cellular regions having a higher relative signal strength are acquired before the scheduling information for the broadcast of interest in the cellular regions having a lower relative signal strength are acquired.

18. A mobile wireless communication device (202) comprising:
a transceiver (206) ; and
a controller (212) coupled to the transceiver (206), the controller including a handover module (214) for managing the handover of the mobile
wireless communication device between a plurality of cellular regions (102), including detecting communication conditions in which the mobile wireless communication device (202) should enter a handover mode including a soft handover mode,
a dedicated communication channel module (216) for initiating a communication connection with the at least one base transceiver station (104) associated with at least one of the plurality of cellular regions (102), and for establishing and maintaining a communication connection via a dedicated channel with one or more additional base transceiver stations (104) respectively associated with one or more additional different cellular regions (102), while continuing to maintain the communication connection with the at least one base transceiver station (104) associated with at least one of the plurality of cellular regions (102) via a dedicated channel, upon entering the soft handover mode of operation, and
a broadcast communication module (218) for establishing and maintaining a broadcast communication including receiving a broadcast notification including an identification of a set of cellular regions (102) communicating the broadcast of interest, and acquiring scheduling information for one or more of the cellular regions identified in the set of cellular regions communicating the broadcast of interest included in the received broadcast notification, while not attempting to acquire scheduling information in connection with receiving the broadcast for any cellular region not identified in the set of cellular regions communicating the broadcast of interest included in the received broadcast of interest.

19. A mobile wireless communication device (202) in accordance with claim 18, wherein the controller (212) includes a microprocessor; and wherein one or more of the handover module (214), the dedicated communication channel module (216) and the broadcast communication channel module (218) include one or more sets of instructions stored in a computer readable format for execution by the microprocessor.

20. A mobile wireless communication device (202) in accordance with claim 18, wherein the mobile wireless communication device is a cellular radio telephone.
